# EUROPEAN PATENT SPECIFICATION

(11) **EP 3 600 724 B1**
(45) Date of publication and mention of the grant of the patent: **21.12.2022**
(21) Application number: 18722739.2
(22) Date of filing: 20.03.2018
(51) Int. Cl.: B22F 3/02, B22F 3/03, B22F 10/10, B29C 64/141, B33Y 10/00, B22F 10/43, B22F 10/64, B22F 5/10, B29C 64/165, B33Y 30/00

(54) **METHOD FOR ADDITIVE MANUFACTURING WITH POWDER MATERIAL**
VERFAHREN ZUR GENERATIVEN HERSTELLUNG MITTELS PULVERFÖRMIGEN MATERIAL
PROCÉDÉ DE FABRICATION ADDITIVE AVEC MATÉRIAU PULVÉRULENT

(30) Priority: 20.03.2017 US 201762473619 P
(43) Date of publication of application: 05.02.2020
(73) Proprietor: Stratasys Ltd., 7612401 Rehovot (IL)
(72) Inventor: SHEINMAN, Yehoshua, 4359221 RaAnana (IL); HIRSCH, Shai, 7630521 Rehovot (IL)
(74) Representative: Kramer, Dani
(86) International application number: PCT/IL2018/050319
(87) International publication number: WO 2018/173050

(56) References cited:
- EP-A2- 0 949 993
- WO-A1-2015/170330
- US-A1- 2004 018 107

## Description

### FIELD AND BACKGROUND OF THE INVENTION

The present invention, in some embodiments thereof, relates to the field of additive manufacturing and, more particularly, but not exclusively, additive manufacturing of three-dimensional objects with powdered material.

A number of different processes for fabricating solid objects by additive manufacturing with successive layers of powdered material are known. Some known additive manufacturing techniques selectively apply a liquid binder material based on a three dimensional (3D) model of the object, binding the powdered material together layer by layer to create a solid structure. In some processes, the object is heated and/or sintered to further strengthen bonding of the material at the end of the building process.

Selective Laser Sintering (SLS) uses a laser as the power source to sinter layers of powdered material. The laser is controlled to aim at points in space defined by a 3D model, binding the material together layer by layer to create a solid structure. Selective laser melting (SLM) is a technique comparable to SLS that comprises full melting of the material instead of sintering. SLM is typically applied when the melting temperature of the powder is uniform, e.g. when pure metal powders are used as the building material.

US Patent No. 4,247,508 entitled "MOLDING PROCESS" describes a molding process for forming a 3D article in layers. In one embodiment, planar layers of material are sequentially deposited. In each layer, prior to the deposition of the next layer, a portion of its area is solidified to define that portion of the article in that layer. Selective solidification of each layer may be accomplished by using heat and a selected mask or by using a controlled heat scanning process. Instead of using a laser to selectively fuse each layer, a separate mask for each layer and a heat source may be employed. The mask is placed over its associated layer and a heat source located above the mask. Heat passing through the opening of the mask will fuse together the particles exposed through the opening of the mask. The particles not exposed to the direct heat will not be fused.

US Patent No. 5,076,869 entitled "MULTIPLE MATERIAL SYSTEMS FOR SELECTIVE BEAM SINTERING" describes a method and apparatus for selectively sintering a layer of powder to produce a part comprising a plurality of sintered layers. The apparatus includes a computer controlling a laser to direct the laser energy onto the powder to produce a sintered mass. For each cross-section, the aim of the laser beam is scanned over a layer of powder and the beam is switched on to sinter only the powder within the boundaries of the cross-section. Powder is applied and successive layers sintered until a completed part is formed. Preferably, the powder comprises a plurality of materials having different dissociation or bonding temperatures. The powder preferably comprises blended or coated materials.

International Patent Publication No. WO2015/170330 entitled "METHOD AND APPARATUS FOR 3D PRINTING BY SELECTIVE SINTERING" discloses a method for forming an object by 3D printing that includes providing a layer of powder on a building tray, performing die compaction on the layer, sintering the layer that is die compacted by selective laser sintering or selective laser melting and repeating the providing, the die compaction and the sintering per layer until the three dimensional object is completed. The selective sintering disclosed is by a mask pattern that defines a negative of a portion of the layer to be sintered.

U.S. Patent Application Publication No. 20040018107 entitled "Metallic parts fabrication using selective inhibition of sintering (SIS)," discloses a selective inhibition of sintering (SIS) technique used to fabricate a three-dimensional (3-D) dense metal object from a binderless metal powder. A number of layers of metal powder are provided on a build tank. For each layer, regions of the layer are sinter-inhibited, e.g., by depositing a sinter-inhibiting material such as a ceramic slurry, a metal salt, or oxidizing metal particles in the powder using chemicals or a concentrated heat source. Each layer may be compacted before the next layer is provided. A final compact may then be sintered. Unwanted sintered sections may be removed from the compact at boundaries formed by the sinter-inhibited (unsintered) regions, and the object extracted.

### SUMMARY OF THE INVENTION

The present invention provides a method for additive manufacturing of a green block including a green object according to claim 1.

According to an aspect of the present invention there is provided a method for additive manufacturing with powder layers. In some example embodiments, an aluminum alloy powder is used as the building material. Optionally, other materials such as pure aluminum, other metal powders, ceramic material, polymer material and a combination of different types of material may be used.

According to some exemplary embodiments, the same powder material is used for both building the object and supporting the object. For example, during the layer building process, the powder may serve as a support for building negative slope surfaces of the object or hollow volumes included in the object. Optionally, at the termination of the layer building process, a green block is formed including a pattern embedded therein that defines one or more elements, e.g. green compacts of usable models and green compacts of support elements. Optionally, compaction is applied on the green block at the termination of the layer building process and prior to separating the green compacts of usable models from the green compacts of support elements. Sintering, e.g. of the green compacts of usable models may then be applied to complete the object,

According to some exemplary embodiments, a boundary between the support area (e.g. areas intended to comprise green compacts of support elements) and the model area (e.g. areas intended to comprise green compacts of usable models) is defined by a pattern of non-powder material that is deposited per layer. For each layer, a three dimensional (3D) printer dispenses a non-powder material that will separate powder material used for building the object, from powder material used for supporting the object being built. In some example implementations, the pattern is also defined to break up the support area into discrete support sections that can be separated from the object at the termination of the layer building process, i.e. green compacts of support elements.

According to the invention, the non-powder material is a solidifiable ink (e.g. thermal ink) that is printed per layer. For each layer, a three dimensional (3D) printer dispenses an ink that will separate powder material used for building the object, from powder material used for supporting the object being built. In some example implementations, the solidifiable ink pattern is also defined to break up the support area into discrete support sections that can be separated from the object at the termination of the layer building process, i.e. green compacts of support elements. In some additional example implementations, the solidifiable ink may be applied as a negative mask in defined areas. The negative mask may prevent cohesion between the powder particles when the layers are compacted. In some additional example implementations, the solidifiable ink may be applied to alter mechanical properties in defined locations in the block of layers as they are being built. In some example implementations, the solidifiable ink pattern is also defined to differentiate or form a boundary between two or more different model or model parts (e.g. green compacts of usable models).

Further advantages of the present invention are defined by the appended claims.

Unless otherwise defined, all technical and/or scientific terms used herein have the same meaning as commonly understood by one of ordinary skill in the art to which the invention pertains. Although methods and materials similar or equivalent to those described herein can be used in the practice or testing of embodiments of the invention, exemplary methods and/or materials are described below. In case of conflict, the patent specification, including definitions, will control. In addition, the materials, methods, and examples are illustrative only and are not intended to be necessarily limiting.

### BRIEF DESCRIPTION OF THE SEVERAL VIEWS OF THE DRAWINGS

Some embodiments of the invention are herein described, by way of example only, with reference to the accompanying drawings. With specific reference now to the drawings in detail, it is stressed that the particulars shown are by way of example and for purposes of illustrative discussion of embodiments of the invention. In this regard, the description taken with the drawings makes apparent to those skilled in the art how embodiments of the invention may be practiced.

In the drawings:
FIG. 1 is a simplified schematic drawing of an exemplary additive manufacturing system that may implement the method of the invention;
FIG. 2 is a simplified schematic drawing of an exemplary per layer building process (side-view) in accordance with some embodiments of the present invention;
FIG. 3 is a simplified block diagram of an exemplary cyclic layer building process in accordance with some embodiments of the present invention;
FIGs. 4A and 4B are simplified schematic drawings of an exemplary compacting system
which may implement the method of the invention in a released and compressed state respectively (side-views);
FIG. 5 is a simplified block diagram of an exemplary printer for printing patterns per layer for defining the object which may implement the method of the invention;
FIG. 6 is a simplified schematic representation of a pattern printed in a layer (top-view) in accordance with some embodiments of the present invention;
FIG. 7 is a simplified schematic representation of three printed layers (side-view) in accordance with some embodiments of the present invention;
FIG. 8 is a simplified schematic drawing of another example pattern formed in a layer (top-view) in accordance with some embodiments of the present invention;
FIG. 9 is a simplified schematic drawing of an example pattern including a negative mask area (top-view) in accordance with some embodiments of the present invention;
FIG. 10 is an image of an example pattern within a powder layer (top-view) in accordance with some embodiments of the present invention;
FIG. 11 is a simplified schematic drawing of an example partition formed with solidifiable ink (side-view) in accordance with some embodiments of the present invention;
FIGs. 12A and 12B are simplified schematic drawings of example columns formed from solidifiable ink through layers shown in a top and side view respectively and in accordance with some embodiments of the present invention;
FIG. 13 is a simplified schematic drawing of example anchors formed from solidifiable ink over a plurality of layers (side-view) in accordance with some embodiments of the present invention;
FIG. 14 is a simplified flow chart of an example method for additive manufacturing with powder material in accordance with some embodiments of the present invention; and
FIGs. 15A, 15B, 15C, 15D, 15E and 15F showing example objects manufactured with the additive manufacturing method according to the invention.

### DESCRIPTION OF SPECIFIC EMBODIMENTS OF THE INVENTION

The present invention, in some embodiments thereof, relates to three dimensional (3D) printing with layers of powdered material and, more particularly, but not exclusively, to 3D printing of metal objects with powdered metal.

As used herein, the terms "green block" and "green compact" are interchangeable. Further as used herein, "green compacts of usable models" and "green bodies" are interchangeable. The terms "object", "model" and "usable model" as used herein are interchangeable.

Additionally as used herein, "green compacts of support elements", "support element", "discrete sections of a support area" and "discrete sections" are interchangeable.

As used herein, the terms "green block", "green compact", "green compacts of usable models", "green bodies", "green compacts of support elements", respectively refer to a "block", a "compact", "compacts of usable models", "bodies", and "compacts of support elements" whose main constituent is a bound material, typically in the form of bonded powder, prior to undergoing a sintering process.

Furthermore, the terms "mask", "pattern", "mask pattern" or "printed pattern" are deemed to refer to a pattern formed with a solidifiable non-powder material, e.g. solidifiable ink.

The term "printing block" refers to the part of the3D inkjet printing system or station, which houses, *inter alia,* the inkjet print heads.

According to an aspect of some embodiments of the present invention there is provided a method for additive manufacturing with powder layers. In some example embodiments, an aluminum alloy powder is used as the building material. Optionally, other materials such as pure aluminum, other metal powders, ceramic material, polymer material and a combination of different types of material may be used. According to some exemplary embodiments, the same powder material is used for both building the object and supporting the object. For example, during the layer building process, the powder may serve as a support for building negative slope surfaces of the object or hollow volumes included in the object.

At the termination of the building process, a green block is formed including a pattern embedded therein that delimits one or more elements, e.g. green compacts of usable models and green compacts of support elements. Optionally, compaction is applied on the green block at the termination of the layer building process and prior to separating the green compacts of usable models from the green compacts of support elements. Sintering, e.g. of the green compacts of usable models is then applied to complete the object.

According to the invention, the solidifiable non-powder material is a solidifiable ink. As used herein, the term "solidifiable ink" refers to an ink material that is solid at ambient temperature and liquid at the moment of printing. Non-limitative examples of solidifiable inks include wax, photo-curable polymers, thermal inks (or phase-change inks), and any combination thereof. Thermal ink and phase change ink as used herein are interchangeable terms and may be defined as a material that is solid at room temperature, has a melting point of less than 120°C, viscosity of less than 50cPs between the melting point temperature and 120°C and that evaporates with substantially no carbon traces at a temperature of above 100 °C. Substantially, no carbon traces may be defined as less than wt. 5% or less than wt.1%. In some example embodiments, the thermal ink has a melt temperature of between 55-65 °C and a working temperature of about 65-75°C, the viscosity may be between 15-17cPs. According to embodiments of the present invention, the thermal ink is configured to evaporate in response to heating with little or no carbon traces.

System which may implement the method of the invention, includes a building tray, a 3D printer for printing a pattern with a solidifiable non-powder material, a powder dispenser with spreader for applying powdered material over the pattern and a process compaction unit for compacting the layers per layer. According to some exemplary embodiments, a controlled linear drive may repeatedly advance the building tray to each of the 3D printer, the powder dispenser, and the process compaction unit for building the plurality of layers. In some exemplary embodiments, the system includes an additional compaction unit for compacting the green block, e.g. at the termination of the green block building process. Optionally, the pattern of solidified non-powder material is evaporated by heating in a dedicated heating process and the support regions are removed to extract the green compacts of usable models from the green block. Optionally, the green compacts of usable models are then sintered in a furnace sintering unit. In specific embodiments, the solidified non-powder material is burnt and the multiple layers are merged during the sintering process.

According to some exemplary embodiments, the 3D printer is an inkjet printer and the solidifiable non-powder material is a solidifiable ink. The solidifiable ink is selectively deposited to trace a pattern for each layer that may include various structural elements such as lines, points, corners, dummy elements and perimeters. In specific embodiments, the printed pattern traces a perimeter of the model(s) to be built and also divides the support area into discrete sections that may later be separated from the compacts of usable models. Both the shape and the size of the discrete sections may be defined in relation to their proximity to the model(s) being built, i.e. usable model. In some example embodiments, the thicknesses of the solidifiable ink elements defining the perimeter are selected based on proximity to the model and the size of the surrounding, neighboring or adjacent discrete sections. Optionally, the solidifiable ink is defined to build a pattern of rhomboids over or through a plurality of layers. In some example embodiments, the solidifiable ink is defined to build a discrete section of support with a defined draft angle based on geometry of the object.

According to some example embodiments, the 3D printing may also be applied to dither the solidifiable non-powder material within powder in support areas per layer to form a negative mask that prevents or weakens cohesion between powder particles during compaction. Such a negative mask may be useful temporarily for building models with narrow internal hollows (e.g. tubes or pipes) or cavities with small apertures. In such cases, once the solidifiable non-powder material has been evaporated, the remaining powder may be easily removed from the tube or cavity. In some additional example embodiments, dithering may be applied in support areas to strengthen the powder layer and/or to support adhesion between layers in defined locations across the building tray. Optionally, the solidifiable non-powder material applied for dithering has a different composition than the solidifiable non-powder material applied to print pattern elements defining the perimeters around the model (i.e. delimiting the contour of the model) and between the sections of support material.

In some example embodiments, the 3D printer may also be applied to print a layer of solidifiable non-powder material on a full footprint of a building tray before the first layer of powder is dispensed on the building tray. This layer of solidifiable non-powder material may stabilize the first layer(s) of powder and may also enable separating the green block from the building tray at the termination of the building process.

In some example embodiments, the 3D printer may also be applied to build support columns with the solidifiable non-powder material along a height of the block of layers.

The 3D printer includes inkjet printing heads assembled on a scanning printing block that moves over the building tray to scan the layer during printing, while the building tray remains stationary. Alternatively, a precision stage may be used to advance the building tray in the scanning direction while the inkjet printing heads block remains stationary in that direction and movable in the orthogonal direction, or completely stationary. In some embodiments, the entire pattern of a specific layer may be printed in a single pass.

According to some exemplary embodiments, the entire layer building process may be performed at ambient temperature. The ability to operate at ambient temperature is typically associated with lower cost of operation and also reduced cost of the system. Operation at high temperatures typically requires more safety measures that are typically associated with higher costs.

According to some exemplary embodiments, the ensemble of layers may be compacted again in a second compaction unit at higher pressure and/or temperature and also for a longer duration, after the green block building process is complete. Alternatively, the second compaction unit is not required.

Building with aluminum is known to be advantageous due to its light weight, heat and electricity conduction, and its relative resistance to corrosion. Typically, the melting temperature of aluminum is relatively low. One of the challenges of building with aluminum powder is that the aluminum particles of the powder tend to form an aluminum oxide coating, e.g. alumina. The aluminum oxide coating introduces a barrier between the aluminum particles that interferes with bonding of the particles during sintering. The final result is typically an object with reduced strength due to poor bonding between the powdered elements. Compaction of green usable models may promote bonding during sintering by breaking up the alumina layer to expose the aluminum and allow direct engagement between aluminum particles of the powdered material.

Before explaining at least one embodiment of the invention in detail, it is to be understood that the invention is not necessarily limited in its application to the details of construction and the arrangement of the components and/or methods set forth in the following description and/or illustrated in the drawings or images. The invention is capable of other embodiments or of being practiced or carried out in various ways.

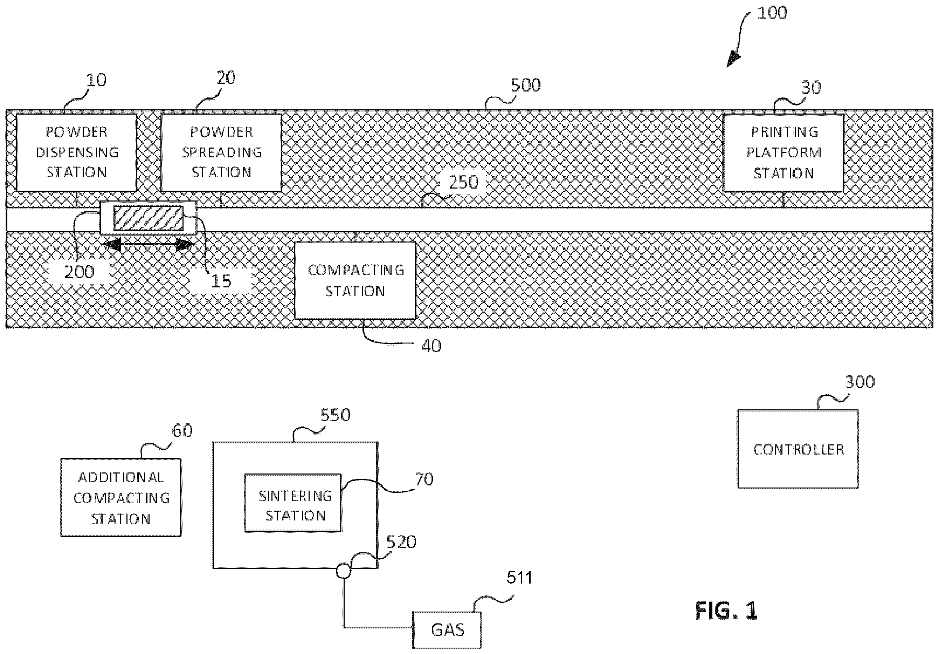

Referring now to the drawings, FIG. 1 shows a simplified block diagram of an exemplary additive manufacturing system that may implement the method of the invention.

The additive manufacturing system 100 is integrated on a working platform 500. The working platform 500 includes a precision stage 250 on which a building tray 200 is advanced through a plurality of stations for forming a green block, e.g. a block of layers 15, one layer at a time. Typically, precision stage 250 is a linear stage, e.g. an X-Z stage providing motion along a single axis, e.g. an X axis while building a layer and also providing motion in the vertical direction (Z-axis) for adjusting height of tray 200, e.g. lowering tray 200 as each new layer is added.

The working platform 500 includes a printing platform station 30, for printing a pattern of a non-powdered material, a powder dispensing station 10 for dispensing a powder layer, a powder spreading station 20 for spreading a layer of dispensed powder, and a compacting station 40 for compacting the layer of powder optionally including a printed pattern. Typically for each layer, building tray 200 advances to each of the stations and then repeats the process until all the layers have been printed.

The tray 200 is advanced in one direction with a stop at printing platform station 30 and then reverses direction with stops at powder dispensing station 10, powder spreading station 20 and compacting station 40. A controller 300 controls operation of each of the stations on working platform 500 and coordinates operation of each of the stations with positioning and/or movement of tray 200 on precision stage 250. Typically, controller 300 includes and/or is associated with memory and processing ability. Optionally, powder dispensing station 10 and powder spreading station 20 are combined into a single powder delivery station.

Optionally, an additional compacting station 60 compacts the ensemble at 150-350 MPa pressure and optionally at a temperature of up to 430°C for between 1-6 minutes. This additional compacting station may also enable die compaction that maintains the Z-axis accuracy. Optionally, it is the additional compacting station 60 that compacts the block of layers to form a green block that includes green compact/s of usable models and green compacts of support elements before post processing. Alternatively, the compacting station 40 completes the compaction during the layer building process or at the end of the layer building process.

Typically, sintering station 70 and optionally additional compacting station 60 are stand alone stations that are separate from working platform 500. Optionally, block of layers 15 is manually positioned into sintering station 70 and/or additional compacting station 60 and not by precision stage 250. Optionally, additional sintering station provides an inert environment for sintering, using for example an inert gas source 511. Optionally, inert gas source 511 is a nitrogen source.

Optionally, each of additional compacting station 60 and sintering station 70 have a separate controller for operating each respective station.

According to some example embodiments, prior to sintering, the pattern formed from the solidifiable non-powder material is evaporated by heating in a dedicated heating process and the support sections are removed to free the green compact/s of usable models. The heating may be at temperatures of 100° C - 150 °C or up to 200 °C. The solidifiable non-powder material may be configured to evaporate at such temperatures with substantially no carbon traces. Optionally, the heating is performed after one or more compaction stages have been completed. The green compact/s of usable models may then be sintered to form the final object.

Furnace sintering may be applied after an additional compaction stage. Temperatures and duration of sintering typically depend on the powder material used and optionally on the size of the object being manufactured. In some exemplary embodiments, the powder material is aluminum. The first stage of the furnace sintering process may be at 300 to 400°C for a period of 20 to 180 minutes. The furnace environment can be inert (Nitrogen) or aerated at this stage. Sintering at higher temperatures may typically be performed in a nitrogen environment. Optionally, the object may be at 570°C to 630°C for 60 to 180 minutes, for Aluminum powder. For stainless steel powder, for instance, the temperature may reach 1250°C. The atmosphere required for stainless steel sintering is a reduced atmosphere, such as hydrogen for example, and not an inert atmosphere. Optionally, the furnace is capable of changing temperature at a rate of 2-20°C/min. Typically, sintering is performed over a plurality of stages, each stage at a defined temperature and for a defined period. In some specific embodiments, wherein a cured photopolymer is used to form a pattern within the block of layers, the sintering stage may be used to burn the photopolymer so that the model may be freed from the surrounding support sections.

The additive manufacturing system 100 described herein provides for printing at improved speed. For example, printing time per layer may be between 25-35 seconds and an estimated building time for a green block including 400 layers may be about 4 hours. A block 15 built on building tray 200 may include a plurality of embedded usable models, e.g. 1-15objects. An example footprint of block 15 may be 20x20 cm.

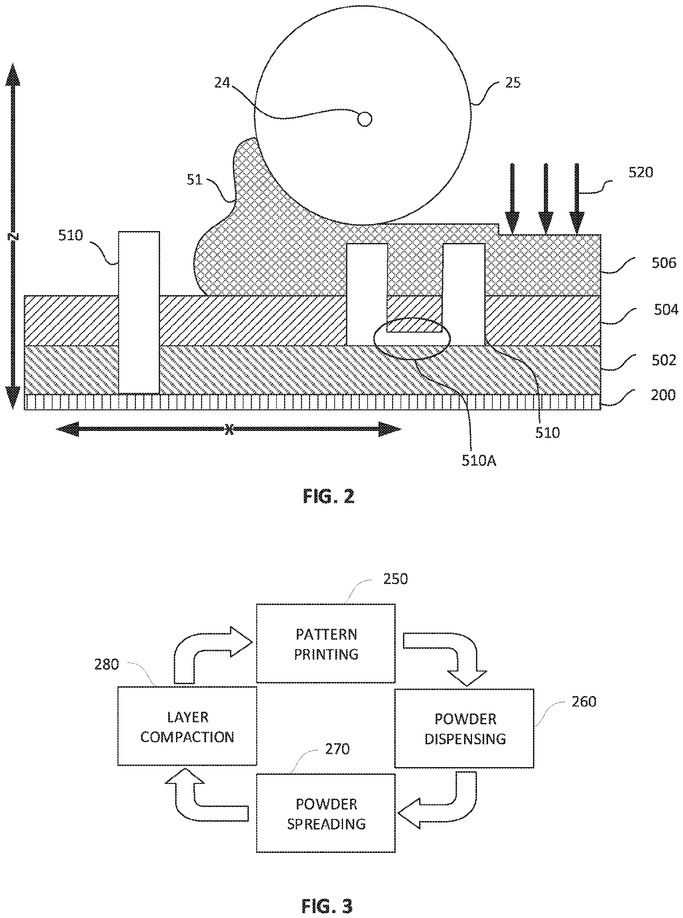

Reference is now made to FIG. 2 showing a simplified schematic drawing of an exemplary per layer building process in accordance with some embodiments of the present invention. FIG. 2 shows an example third layer 506 in the process of being built over an example first layer 502 and second layer 504. According to the invention, a pattern 510 is dispensed per layer with a three dimensional printer. According to the invention, pattern 510 is formed with a solidifiable non-powder material, e.g. a solidifiable ink. Pattern 510 may physically contact a pattern 510 in a previous layer or layers, e.g. layers 504 and 502 or may be patterned over an area of the previous layer including the powder material. A height of pattern 510 per layer may be substantially the same as a height of the layer or may optionally be shorter than a height of the layer, e.g. portion 510A of pattern 510 in layer 504.

Powder 51 is spread over the pattern 510 and across a footprint of a building tray 200. In some example embodiments, powder 51 is spread with a roller 25. Optionally, roller 25 is actuated to both rotate about its axle 24 and to move across building tray 200 along an X axis. Once powder 51 is spread across the footprint of tray 200, compaction 520 may be applied on the entire layer to compact layer 506. Typically, a height of layer 506 is reduced due to process compaction, optionally as well as previous layers 502 and 504.

Reference is now made to FIG. 3 showing a simplified block diagram of an exemplary cyclic process for building layers in accordance with the present invention. An object (i.e. a green compact of a usable model) is constructed layer by layer within a green block in a cyclic process. Each cycle of the cyclic process includes the steps of printing a pattern (block 250) at a printing platform station 30, dispensing (block 260) and spreading (block 270) a powder material over the pattern at dispensing station 10 and spreading station 20 (optionally combined into a single "powder delivery station") and compacting the powder layer including the pattern (block 280) at a compacting station 40. The pattern is formed from a solidifiable non-powder material such as a solidifiable ink. Compaction may comprise die compaction per layer. Each cycle forms one layer of the green block and the cycle is repeated until all the layers have been built. Optionally, one or more layers may not require a pattern and the step of printing the pattern (block 250) may be excluded from selected layers. Optionally, one or more layers may not require powder material and the step of dispensing and spreading a powder material (blocks 260 and 270) may be excluded from selected layers. This cyclic process yields a green block, which includes one or more green compacts of usable models, one or more green compacts of support elements and a solidified non-powder material.

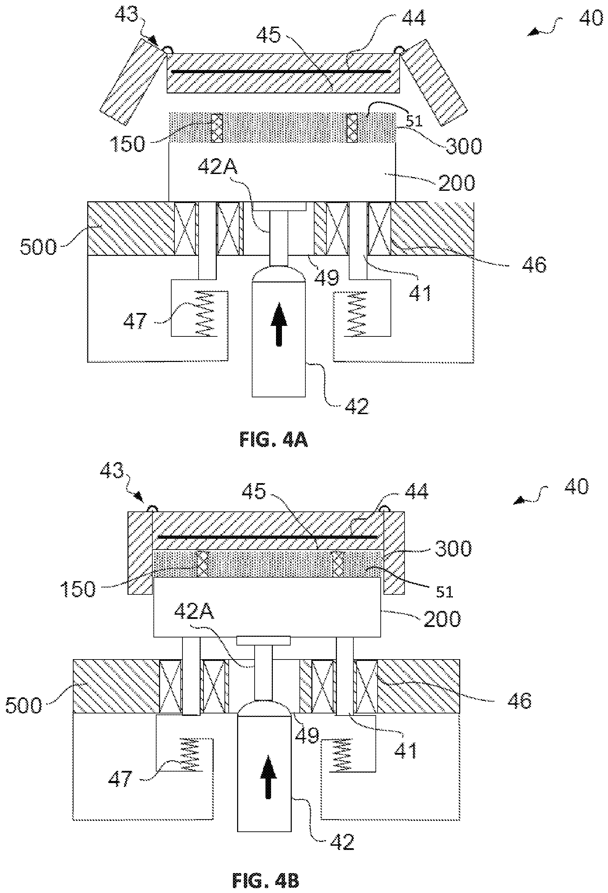

Reference is now made to FIGS. 4A and 4B showing a simplified schematic drawings of an exemplary die compaction station shown in a released and compressed state respectively.

A compacting station 40 may include a piston 42 that provides the compaction pressure for compacting a layer 300. During compaction, piston 42 may be raised through a bore 49 and optionally pushes rod 42A in working platform 500 or precision stage 250 and lifts building tray 200 towards a surface 45 positioned above tray 200. Rod 42A may function to reduce distance that piston 42 is required to move to achieve the compaction.

Optionally, once layer 300 makes contact with surface 45 walls 43 close in around the layer 300 to maintain a constant footprint of the layer 300 during compaction.

Building tray 200 may be secured to one or more linear guides 41 that ride along linear bearings 46 as piston 42 elevates and/or lowers tray 200. Optionally, tray 200 is lifted against one or more compression springs 47. Gravitational force as well as springs 47 may provide for lowering piston 42 after compacting layer 300.

A pressure of up to 250 MPa or 300 MPa may be applied to compact a layer. Typically, the applied pressure provides for removing air and bringing powder in layer 300 past its elastic state so that permanent deformation of the layer is achieved. Optionally, the compaction provides for increasing the relative density of the layer to about 70% to 75% of a wrought density of the powder material. For several alloys the relative density may reach up to 90% of the wrought density. Optionally, compaction reduces the thickness of a layer by up to 25%. Optionally, a compaction pressure of around 30 - 90 MPa is applied. Optionally, the compaction is performed at room temperature.

In some embodiments, upper surface 45 may be heated, e.g. pre-heated with a heating element 44 during compaction. When heating surface 45, layer 300 can reach its plastic and/or permanent deformation state with less pressure applied on the layer. Optionally, in aluminum powder case, upper surface 45 is heated to a temperature of 150° C, e.g. 150° - 200° C. Typically there is a tradeoff between compaction temperature and pressure. Increasing the temperature during compaction may provide for reaching plastic deformation at lower pressure. On the other hand, reducing temperature of upper surface 45 may reduce the energy efficiency of the compaction since higher pressure may be required.

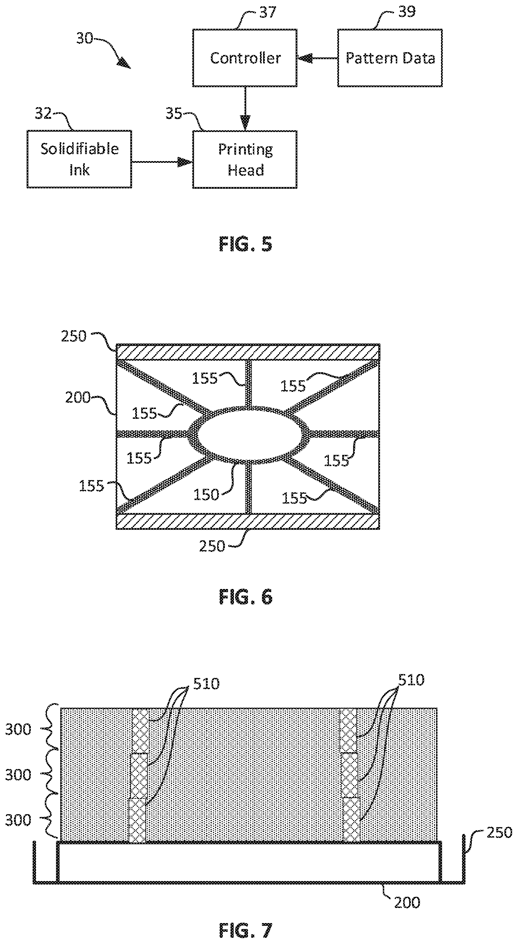

Reference is now made to FIG. 5 showing a simplified schematic drawing of an exemplary 3D printing system that may implement the method of the invention.

Printing platform station 30 includes an inkjet printing head 35 that deposits a solidifiable ink 32 based on a generated pattern data 39. Typically, the pattern is defined by pattern data 39 that is stored in memory. Typically, the pattern data is generated by a computer aided design (CAD) software program or the like.

Optionally printing head 35 is stationary and printer controller 37 together with system controller 300 control timing for depositing solidifiable ink 32 as tray 200 advances under printing head 35. Optionally, printing head 35 is mounted on a Y axis stage and moves in a direction perpendicular to tray 200. Alternatively, tray 200 is stationary during printing and printing head 35 is supported by an X, Y or XY stage for moving printing head 35 in one or more directions. Typically, printing head 35 includes an array of nozzles through which solidifiable ink is selectively deposited.

Reference is now made to FIG. 6 showing a simplified schematic representation (top-view) of one pattern layer printed on a building tray (or a preceding upper layer surface) in accordance with some embodiments of the present invention. According to some embodiments of the present invention, printing head 35 prints with solidifiable ink a pattern that delimits a contour 150 of the model being formed, in each layer. Typically, the first pattern layer is printed on building tray 200 or other building surface. In some exemplary embodiments, printing head additionally prints patterning lines 155 extending from contour 150 toward edges of building tray 200 or toward gutters 250 at edges of building tray 200. In some exemplary embodiments, patterning lines 155 of the solidifiable ink pattern within the layer are defined to divide the powder outside of contour 150 (i.e. in the support area) into discrete sections so that the area outside contour 150 can be easily separated from the model at the end of the green block building process.

Reference is now made to FIG. 7 showing a simplified schematic representation of three printed layers for forming an object in accordance with some embodiments of the present invention. According to some embodiments of the present invention, solidifiable ink 510 patterned on one layer 300 may physically contact solidifiable ink 510 patterned on a subsequent layer 300 to form a continuous boundary through the layers 300. This continuous boundary formed from stacked patterns 510 may define a 3D contour of the model at the end of the green block building process and may also define support sections.

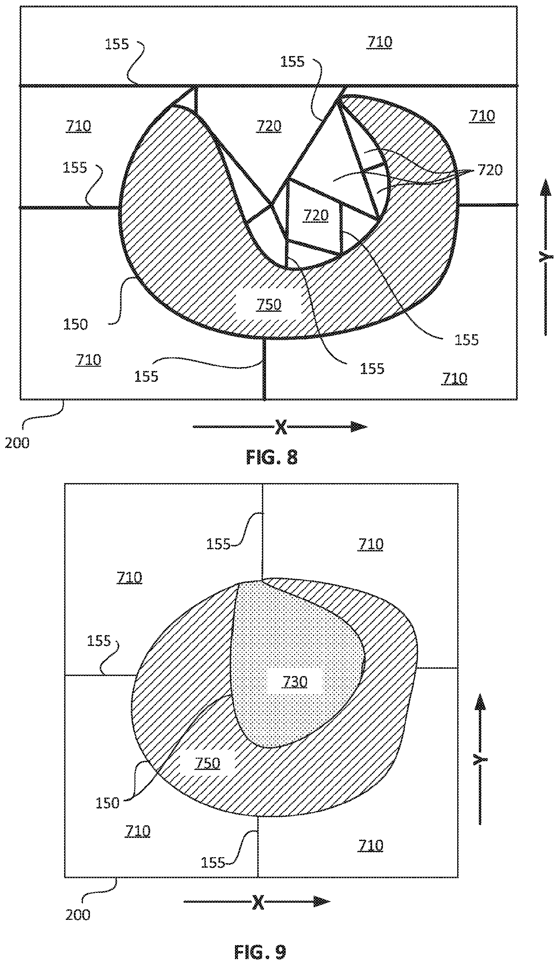

Reference is now made to FIG. 8 showing a simplified schematic drawing of an example pattern formed in a layer to build a three-dimensional object in accordance with some embodiments of the present invention. According to example implementations, the solidifiable non-powder material, e.g. a solidifiable ink, traces a contour 150 of an object 750 and also divides the support area with patterning lines 155 into sections that can be easily separated from object 750 at the end of the green block building process. Some support areas are divided into large support sections 710. Other support areas may be divided into smaller support sections 720 that more carefully take into account a geometry of object 750 and facilitate separation of support sections 720 from object 750 at the end of the green block building process. In some example embodiments, support sections 720 may be defined to provide a desired draft angle to ease extraction of object 750 from the green block. Both the size and the shape of support sections 720 may be defined to ease separation of the object from the green block. Smaller support sections 720 may be defined near a surface of object 750 and larger support sections 710 may be defined away from the surface of object 750.

Reference is now made to FIG. 9 showing a simplified schematic drawing of an example pattern including a negative mask area in accordance with some embodiments of the present invention. Negative masking may be applied in defined areas where it may be difficult to remove solidified support sections, e.g. such as within cavities defined by the object. The negative masking creates a support section 730 that will remain in a powder state after the solidifiable non-powder is removed and thus be easily removable from the cavity (i.e. as opposed to other support areas that solidify into discrete sections during the process). According to some example embodiments, negative masking is formed by dithering solidifiable non-powder material in a defined support section 730. The degree of dithering may range between 5-50% or between 5-100% of solidifiable non-powder material in the layer. Typically, a partition of solidified non-powder material separates the negative mask from the object. Some portions of a layer may be patterned with negative mask while other portions may include a pattern that divides the support area into discrete support sections 710.

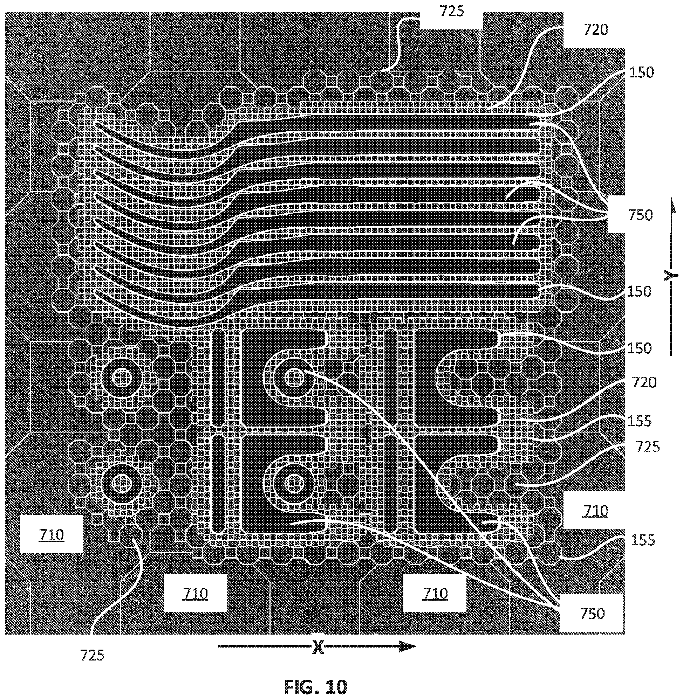

Reference is now made to FIG. 10 showing an image of an example pattern of a solidified non-powder material, e.g. a solidified ink, within a powder layer in accordance with some embodiments of the present invention. Structural elements built from solidifiable non-powder material are shown as white lines or dots and powder material is shown in black. Gray areas include a dither of solidifiable non-powder material within powder material. In some example implementations, the solidifiable non-powder material walls or partitions forming contour 150 around the object are thicker than the walls or patterning lines 155 around discrete support sections, e.g. sections 710, 720 and 725. The thicker walls facilitate separation of the surrounding sections and with less force while thinner walls use less solidifiable non-powder material. In some example implementations, it may be desirable to selectively limit the amount of non-powder material applied to build the partitions. The partitions of solidifiable non-powder material may reduce the compression of the powder adjacent to the partitions as the solidifiable non-powder material may not be substantially compressible. Furthermore, a large amount of solidifiable non-powder material may cause buckling and deformation of the partitions under pressure.

Optionally, smaller support sections 720 may be defined in support areas surrounding object 750 and the support sections may increase in size, e.g. support sections 725 and 710 as they are distanced from an object 750. The smaller support sections 720 as well as support sections 725 may follow the shape of the object more closely and may be separated from the object with less force as compared to removal of large support sections 710. The smaller size support sections 720 and possibly support sections 725 may also be positioned in cavities formed within object 750 so that the support can be removed through openings of the cavity. In some example implementations, rhomboid-shaped support sections are defined in the support areas to partition the support area.

According to some example implementations, solidifiable non-powder material is dithered across selected support areas, e.g. support sections 710. The dithering of the solidifiable non-powder material may act as an adhesive that may aid in holding the powder together especially in areas that may see lower pressures during compaction. Optionally, the amount of dithering may be defined to vary across the building tray with more dithering near corners of the building tray and less dithering toward the central area of the building tray. Typically, only support areas are dithered with solidifiable non-powder material. Optionally, the dithering may occupy between 5% to 50% of the layer volume or 5% to 100%. Optionally, the dithering is a random pattern of solidifiable non-powder material drops applied across a defined area.

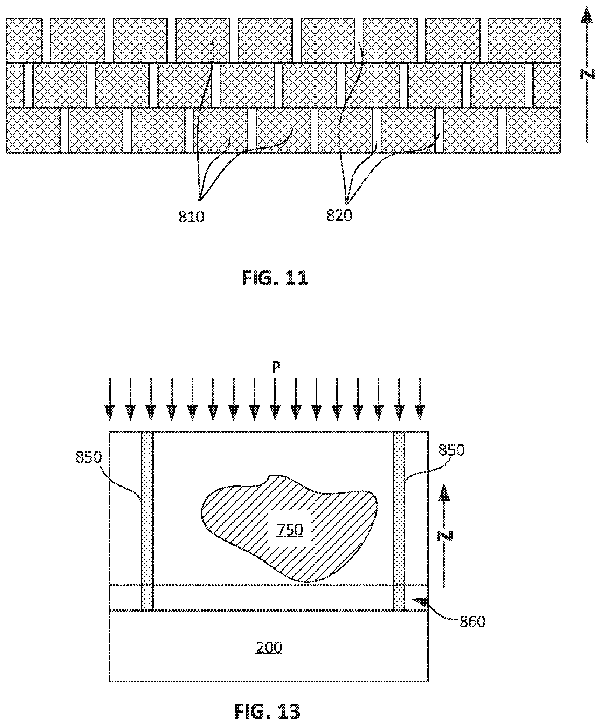

Reference is now made to FIG. 11 showing a simplified schematic drawing of an example partition formed with solidifiable non-powder material in accordance with some embodiments of the present invention. Three example layers of solidifiable non-powder material are shown. In some example embodiments, the partitions formed with solidifiable non-powder material 810 may include defined gaps 820. Optionally gaps 820 are between 60-100 µm wide or about 80 µm wide. Gaps 820 which are narrow may be defined so that relatively little or no powder will penetrate into gaps 820 during powder spreading over the solidifiable non-powder material pattern 810. The gaps may add a compressible quality to the partition. In response to pressure, the solidifiable non-powder materials may buckle or collapse into the gaps. This may allow the powder adjacent to the partitions to properly compress.

Gaps 820 are shown to be staggered across the layers. Optionally, the staggering may be used to limit the amount of powder that may penetrate into gap 820. Alternatively each layer may include gaps that are encapsulated so that powder cannot penetrate through the gaps.

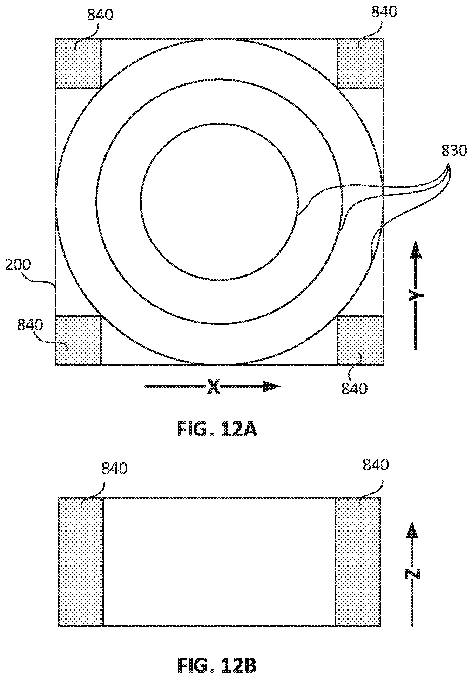

Reference is now made to FIGs. 12A and 12B showing simplified schematic drawings of example columns formed from solidifiable non-powder material through a plurality of layers shown in a top and side view respectively and in accordance with some embodiments of the present invention. The pressure applied on the building tray during compaction may typically not be uniform over the entire building tray 200. Typically, the pressure distribution may be defined by a plurality of concentric isobars 830. Due to the variation in pressure and square shape of building tray 200, the corners of building tray 200 see the lowest pressure and therefore the compaction is lowest at the corners. In some example embodiments, solidifiable non-powder material columns 840 may be built at the corners. Columns 840 may include a mix of powder and solidifiable non-powder material, for instance with between 50-100% solidifiable non-powder material. The solidifiable non-powder material may provide mechanical support to the corners. According to some example embodiments, in addition to columns 840 or in place of columns 840, solidifiable non-powder material is dithered in support areas in varying concentrations across building tray 200. Optionally, the concentration of the solidifiable non-powder material for the support area may vary linearly from the edges of the building tray (patterned with a relatively high concentration of dithering) toward the central area (patterned with a relatively low concentration of dithering), for instance following concentric isobars 830. Optionally, the variation is between the edge and a defined central area and in the defined central area a constant concentration of dithering is applied in the support areas.

Reference is now made to FIG. 13 showing a simplified schematic drawing of example anchors formed from solidifiable non-powder material through a plurality of layers in accordance with some embodiments of the present invention. According to some sample embodiments, one or more anchors 850 through the layers formed with solidifiable non-powder material or a mix of solidifiable non-powder material with powder are applied to prevent separation of the layers for example in the lower section 860 above the building tray 200 that typically does not include object 750 and therefore may not include a pattern of solidifiable non-powder material. The difference in the mechanical properties of the layers including object 750 and the base layers in section 860 that do not include object 750 may cause a strain that will lead to separation of the bottom layers from the upper layers. Optionally, one or more anchors 850 displaced from object 750 may increase the bonding between the layers during the layer building process.

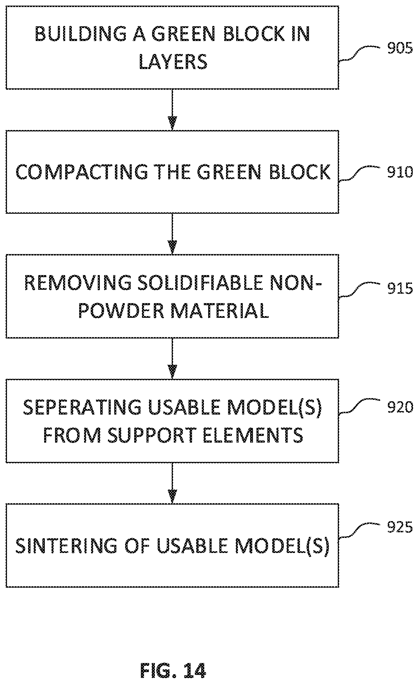

Reference is now made to FIG. 14 showing a simplified flow chart of an example method for additive manufacturing with powder material in accordance with some embodiments of the present invention. According to some example embodiments, 3D printing system builds a block of layers, i.e. a green block including one or more green objects surrounded by green support sections (block 905), i.e. green compacts of usable models and green compacts of support elements. Both the green compacts of usable models and the green compacts of support elements may be formed from a powder material, e.g. the same powder material. At the termination of the building process the green block may undergo an additional compacting process (block 910). The additional compaction may be configured to bring density of block to 95% or more of wrought material density. Optionally compaction is at around 2,500 bar. Optionally, additional compaction is performed with a cold isostatic pressing process. Optionally, compaction is performed over a plurality of cycles.

The solidifiable non-powder material is then removed (block 915). Removing may be based on heating the green block to a temperature in which the solidifiable non-powder material is evaporated. Optionally, the block may be raised to a temperature of between 100-150 °C during this process.

After the solidifiable non-powder material has been removed, the support elements are separated from the one or more usable models in the block (block 920). Optionally, the support elements are removed manually by hand. In other example embodiments, the support elements may be removed based on immersing the green block in a liquid, e.g. water. The green usable models that have been separated are sintered (block 925). Sintering may be at around 600°C or more. Sintering converts the green usable models to a final three-dimensional object.

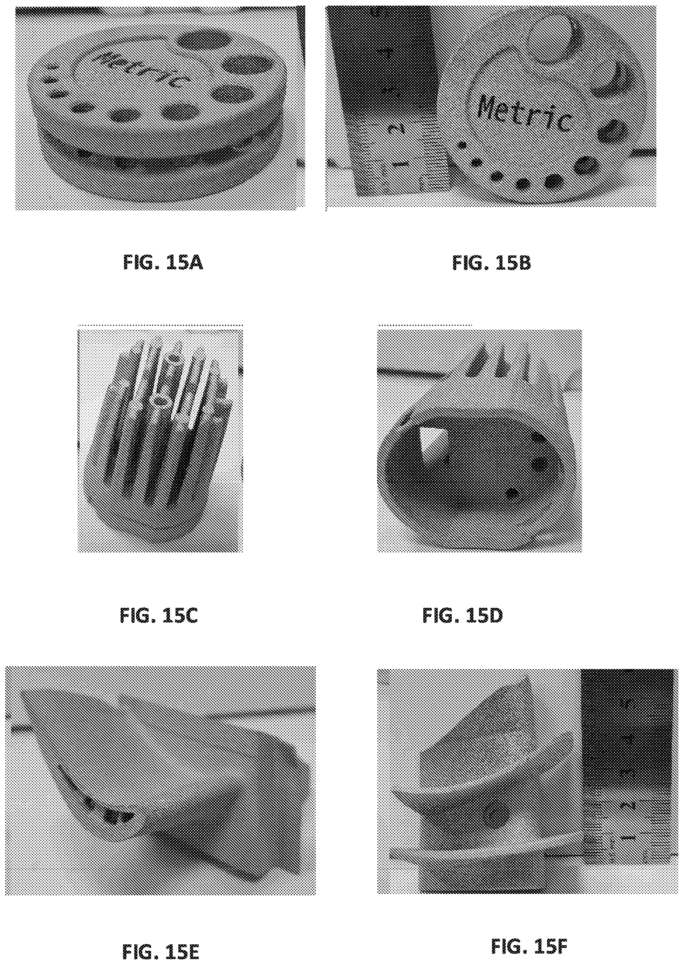

Reference is now made to FIGS. 15A, 15B, 15C, 15D, 15E and 15F showing example of three-dimensional objects manufactured with the additive manufacturing method and apparatus described herein. As can be seen, objects with complex geometries and with small channels may be built with relatively high accuracy with the methods described herein.

The terms "comprises", "comprising", "includes", "including", "having" and their conjugates mean "including but not limited to".

The term "consisting of' means "including and limited to".

The term "consisting essentially of" means that the composition, method or structure may include additional ingredients, steps and/or parts, but only if the additional ingredients, steps and/or parts do not materially alter the basic and novel characteristics of the claimed composition, method or structure.

It is appreciated that certain features of the invention, which are, for clarity, described in the context of separate embodiments, may also be provided in combination in a single embodiment. Conversely, various features of the invention, which are, for brevity, described in the context of a single embodiment, may also be provided separately or in any suitable subcombination or as suitable in any other described embodiment of the invention. Certain features described in the context of various embodiments are not to be considered essential features of those embodiments, unless the embodiment is inoperative without those elements.

## Claims

1. A method for additive manufacturing of a green block (15) including a green object (750), said method comprising:
printing a pattern (510) on a building tray (200) based on selectively depositing a solidifiable non-powder material, said pattern (510) defined to form a partition by tracing a perimeter (150) of the object (750) to be printed per layer, and tracing a plurality of discrete support sections (710, 720, 725) of a support area around the object (750); wherein the pattern (510) is printed with the solidifiable non-powder material;
applying a layer of powder material (51) over the pattern (510);
compacting the layer of powder material (51) and pattern (510) of solidifiable non-powder material;
repeating the printing, applying and compacting to build a plurality of layers of said green block (15);
**characterized in that**:
the solidifiable non-powder material is selected from the group consisting of a thermal ink, a photo-curable ink, wax, or any combination thereof, and the method comprises:
removing the non-powder material;
separating the green object (750) from the discrete support sections (710, 720, 725); and
sintering the green object (750) separated from the discrete support sections (710, 720, 725).

2. The method according to claim 1, comprising defining the pattern of the plurality of discrete support sections (710, 720, 725) of a support area around the object (750) based on geometry of the object (750).

3. The method according to claim 2, wherein the plurality of discrete support sections (710, 720, 725) is defined to include different sized sections.

4. The method according to claim 2 or claim 3, wherein a part of the plurality of discrete support sections (710, 720, 725) is defined to be shaped as rhomboids.

5. The method according to any one of claims 2-4, wherein the width of a trace around a discrete support section (710, 720, 725) is defined based on distance to the object (750) and size of the discrete support section (710, 720, 725).

6. The method according to any one of claims 2-5, wherein the discrete support section (710, 720, 725) is defined to have a selected draft angle.

7. The method according to any one of claims 2-6, wherein at least one of the discrete support sections (710, 720, 725) is defined to be patterned with a dither of the solidifiable non-powder material, wherein the dither forms a negative mask that prevents or weakens cohesion between powder particles during compaction.

8. The method according to claim 7, wherein the dither of solidifiable non-powder material is defined to occupy up to 50% of the at least one discrete support section (710, 720, 725) and wherein a percent of dithering in the plurality of discrete support sections (710, 720, 725) is defined based on the distance of a discrete support section (710, 720, 725) from a corner of the building tray (200).

9. The method according to any one of claims 2-8, wherein the four corners of the building tray (200) are defined to be formed with columns (840) of the solidifiable non-powder material.

10. The method according to any one of claims 2-9, wherein the pattern (510) is defined to include at least one solidifiable non-powder material column (840) extending through a plurality of layers.

11. The method according to any one of claims 2-10, wherein a partition formed by tracing a perimeter (150) of the object (750) is defined to include a plurality of gaps (820), wherein the gaps (820) are narrower than 100 µm.

## Patentansprüche

1. Verfahren zur generativen Herstellung eines grünen Blocks (15), der ein grünes Objekt (750) umfasst, wobei das genannte Verfahren Folgendes umfasst:
Drucken eines Musters (510) auf ein Bautablett (200) basierend auf dem selektiven Auftragen eines verfestigbaren Nicht-Pulvermaterials, wobei das genannte Muster (510) so definiert ist, dass es eine Trennwand bildet durch Aufzeichnen eines Umfangs (150) des zu bedruckenden Objekts (750) pro Schicht, und Aufzeichnen einer Vielzahl von diskreten Stützabschnitten (710, 720, 725) eines Stützbereichs um das Objekt (750); wobei das Muster (510) mit dem verfestigbaren Nicht-Pulvermaterial gedruckt wird;
Aufbringen einer Schicht aus Pulvermaterial (51) über dem Muster (510);
Verdichten der Schicht aus Pulvermaterial (51) und des Musters (510) aus verfestigbarem Nicht-Pulvermaterial;
Wiederholen des Druckens, Auftragens und Verdichtens, um eine Vielzahl von Schichten des genannten grünen Blocks (15) aufzubauen;
**dadurch gekennzeichnet, dass**:
das verfestigbare Nicht-Pulvermaterial aus der Gruppe ausgewählt wird, die aus einer thermischen Tinte, einer photoaushärtbaren Tinte, Wachs oder einer beliebigen Kombination davon besteht, und das Verfahren Folgendes umfasst:
Entfernen des Nicht-Pulvermaterials;
Trennen des grünen Objekts (750) von den diskreten Trägerabschnitten (710, 720, 725); und
Sintern des von den diskreten Trägerabschnitten (710, 720, 725) getrennten grünen Objekts (750).

2. Verfahren nach Anspruch 1, das das Definieren des Musters der Vielzahl von diskreten Stützabschnitten (710, 720, 725) eines Stützbereichs um das Objekt (750) herum basierend auf der Geometrie des Objekts (750) umfasst.

3. Verfahren nach Anspruch 2, wobei die Vielzahl von diskreten Stützabschnitten (710, 720, 725) so definiert ist, dass sie unterschiedlich große Abschnitte umfasst.

4. Verfahren nach Anspruch 2 oder Anspruch 3, wobei ein Teil der Vielzahl von diskreten Stützabschnitten (710, 720, 725) so definiert ist, dass sie als Rhomben geformt sind.

5. Verfahren nach einem der Ansprüche 2 bis 4, wobei die Breite einer Spur um einen diskreten Stützabschnitt (710, 720, 725) basierend auf dem Abstand zum Objekt (750) und der Größe des diskreten Stützabschnitts (710, 720, 725) definiert wird.

6. Verfahren nach einem der Ansprüche 2 bis 5, wobei der diskrete Stützabschnitt (710, 720, 725) so definiert ist, dass er einen ausgewählten Schrägstellungswinkel aufweist.

7. Verfahren nach einem der Ansprüche 2 bis 6, wobei mindestens einer der diskreten Trägerabschnitte (710, 720, 725) so definiert ist, dass er mit einem Dither des verfestigbaren, nicht-pulvrigen Materials gemustert ist, wobei der Dither eine negative Maske bildet, die die Kohäsion zwischen den Pulverteilchen während der Verdichtung verhindert oder schwächt.

8. Verfahren nach Anspruch 7, wobei der Dither aus verfestigbarem Pulvermaterial so definiert ist, dass er bis zu 50% des mindestens einen diskreten Trägerabschnitts (710, 720, 725) einnimmt und wobei ein Prozentsatz des Ditherns in der Vielzahl von diskreten Stützabschnitten (710, 720, 725) basierend auf dem Abstand eines diskreten Stützabschnitts (710, 720, 725) von einer Ecke des Bautabletts (200) definiert ist.

9. Verfahren nach einem der Ansprüche 2 bis 8, wobei die vier Ecken des Bautabletts (200) so definiert sind, dass sie mit Säulen (840) aus dem verfestigbaren nicht-pulvrigen Material gebildet werden.

10. Verfahren nach einem der Ansprüche 2 bis 9, wobei das Muster (510) so definiert ist, dass es mindestens eine Säule (840) aus verfestigbarem, nicht-pulverförmigem Material umfasst, die sich durch eine Vielzahl von Schichten erstreckt.

11. Verfahren nach einem der Ansprüche 2 bis 10, wobei eine Trennwand, die durch Aufzeichnen eines Umfangs (150) des Objekts (750) gebildet wird, so definiert ist, dass sie eine Vielzahl von Lücken (820) umfasst, wobei die Lücken (820) schmaler als 100 µm sind.

## Revendications

1. Procédé destiné à la fabrication additive d'un bloc cru (15) incluant un objet cru (750), ledit procédé comprenant :
l'impression d'un motif (510) sur un plateau de construction (200) sur la base d'un dépôt sélectif d'un matériau non pulvérulent solidifiable, ledit motif (510) défini pour former une partition par traçage d'un périmètre (150) de l'objet (750) devant être imprimé par couche, et traçage d'une pluralité de sections de support individuelles (710, 720, 725) d'une zone de support autour de l'objet (750) ; dans lequel le motif (510) est imprimé avec le matériau non pulvérulent solidifiable ;
l'application d'une couche de matériau pulvérulent (51) sur le motif (510) ;
le compactage de la couche de matériau pulvérulent (51) et du motif (510) de matériau non pulvérulent solidifiable ;
la répétition de l'impression, de l'application et du compactage pour construire une pluralité de couches dudit bloc cru (15) ;
**caractérisé en ce que** :
le matériau non pulvérulent solidifiable est choisi parmi le groupe constitué par une encre thermique, une encre photodurcissable, de la cire, ou toute combinaison de celles-ci, et le procédé comprend :
l'élimination du matériau non pulvérulent ;
la séparation de l'objet cru (750) des sections de support individuelles (710, 720, 725) ; et
le frittage de l'objet cru (750) séparé des sections de support individuelles (710, 720, 725).

2. Procédé selon la revendication 1, comprenant la définition du motif de la pluralité de sections de support individuelles (710, 720, 725) d'une zone de support autour de l'objet (750) sur la base de la géométrie de l'objet (750) .

3. Procédé selon la revendication 2, dans lequel la pluralité de sections de support individuelles (710, 720, 725) est définie pour inclure des sections de dimensions différentes.

4. Procédé selon la revendication 2 ou la revendication 3, dans lequel une partie de la pluralité de sections de support individuelles (710, 720, 725) est définie pour être façonnée comme des rhomboïdes.

5. Procédé selon l'une quelconque des revendications 2 à 4, dans lequel la largeur d'une trace autour d'une section de support individuelle (710, 720, 725) est définie sur la base d'une distance jusqu'à l'objet (750) et d'une dimension de la section de support individuelle (710, 720, 725) .

6. Procédé selon l'une quelconque des revendications 2 à 5, dans lequel la section de support individuelle (710, 720, 725) est définie pour avoir un angle de dépouille sélectionné.

7. Procédé selon l'une quelconque des revendications 2 à 6, dans lequel au moins l'une des sections de support individuelles (710, 720, 725) est définie pour être ornée de motifs avec un tramage du matériau non pulvérulent solidifiable, dans lequel le tramage forme un masque négatif qui empêche ou affaiblit la cohésion entre des particules de poudre pendant le compactage.

8. Procédé selon la revendication 7, dans lequel le tramage de matériau non pulvérulent solidifiable est défini pour occuper jusqu'à 50 % de l'au moins une section de support individuelle (710, 720, 725) et dans lequel un pourcentage de tramage dans la pluralité de sections de support individuelles (710, 720, 725) est défini sur la base de la distance d'une section de support individuelle (710, 720, 725) depuis un coin du plateau de construction (200) .

9. Procédé selon l'une quelconque des revendications 2 à 8, dans lequel les quatre coins du plateau de construction (200) sont définis pour être formés avec des colonnes (840) du matériau non pulvérulent solidifiable.

10. Procédé selon l'une quelconque des revendications 2 à 9, dans lequel le motif (510) est défini pour inclure au moins une colonne de matériau non pulvérulent solidifiable (840) s'étendant à travers une pluralité de couches.

11. Procédé selon l'une quelconque des revendications 2 à 10, dans lequel une partition formée par traçage d'un périmètre (150) de l'objet (750) est définie pour inclure une pluralité d'écarts (820), dans lequel les écarts (820) sont plus étroits que 100 µm.
